# EUROPÄISCHE PATENTSCHRIFT

(11) **EP 4 201 166 B1**
(45) Veröffentlichungstag und Bekanntmachung des Hinweises auf die Patenterteilung: **07.05.2025**
(21) Anmeldenummer: 22214628.4
(22) Anmeldetag: 19.12.2022
(51) Int. Cl.: A01B 17/00, A01B 49/02

(54) **BODENBEARBEITUNGSGERÄT**
SOIL CULTIVATION IMPLEMENT
OUTIL DE TRAVAIL DU SOL

(30) Priorität: 21.12.2021 DE 102021214803
(43) Veröffentlichungstag der Anmeldung: 28.06.2023
(73) Patentinhaber: LEMKEN GmbH & Co. KG, 46519 Alpen (DE)
(72) Erfinder: Mäsing, Stefan, 46325 Borken (DE); Bergemann, Christian, 46244 Bottrop (DE); Wübbels, Benedikt, 46325 Borken (DE)

(56) Entgegenhaltungen:
- DE-A1- 2 752 764
- DE-A1- 2 824 808
- DE-A1- 3 412 512
- DE-B4- 10 147 595

## Beschreibung

### TECHNISCHES GEBIET

Die vorliegende Erfindung betrifft ein Bodenbearbeitungsgerät zum Bearbeiten eines Bodens mit Bodenbearbeitungswerkzeugen entlang einer Arbeitsrichtung, das dazu ausgestaltet ist, in einer ersten Arbeitsstellung eine linkswendende Bearbeitung des Bodens und in einer zweiten Arbeitsstellung eine rechtswendende Bearbeitung des Bodens durchzuführen, wobei an dem Bodenbearbeitungsgerät eine Bodennachbearbeitungseinheit angebracht ist.

### HINTERGRUND

Im Stand der Technik sind Bodenbearbeitungsgeräte bekannt, die dafür genutzt werden, einen Boden, wie zum Beispiel einen Acker, mittels Bodenbearbeitungswerkzeugen zu bearbeiten, um für eine Verbesserung der Bodenqualität zu sorgen und den Boden für eine anschließende Kultivierung oder Aussaat vorzubereiten. Typische Bodenbearbeitungsgeräte dieser Art sind zum Beispiel Pflüge, wobei daran angebrachte Pflugkörper den Boden beim Überfahren des Bodens entlang einer Arbeitsrichtung umwenden. Das Umwenden erfolgt mitunter derart, dass ein Bodenbalken durch eine Schar des Pflugkörpers von einer Furchensohle abgelöst, auf ein Streichblech geführt, davon um eine Längsachse gedreht und anschließend zu einer Seite des abgelösten Balkens abgelegt wird. Bei einer rechtswendenden Bodenbearbeitung dieser Art wird der Bodenbalken in Arbeitsrichtung gesehen rechts von seiner ursprünglichen Position auf dem Untergrund abgelegt, dabei wird der Bodenbalken in Arbeitsrichtung gesehen im Uhrzeigersinn nach rechts gedreht. Bei einer linkswendenden Bearbeitung verhält es sich genau anders herum, **d.h.** der Bodenbalken wird in Arbeitsrichtung gesehen links von seiner ursprünglichen Position auf dem Untergrund abgelegt und dabei in Arbeitsrichtung gesehen gegen den Uhrzeigersinn nach links gedreht. Die Arbeitsrichtung ist diejenige Richtung, in die das Bodenbearbeitungsgerät zur Bearbeitung des Bodens bewegt wird.

Ein Bodenbearbeitungsgerät, das einen Boden linkswendend oder rechtswendend im Sinne der vorliegenden Erfindung bearbeitet, ist insbesondere einer seitlich wirkenden Kraft ausgesetzt und kann zum Beispiel auch eine Scheibenegge sein, deren Scheiben schräggestellt zu einer Arbeitsrichtung den Boden aufschneiden und mischen. Dabei kommt es je nach Schrägstellung der Scheiben der Scheibenegge bezüglich der Arbeitsrichtung zu einer rechts oder linksseitigen Verlagerung von Teilen des bearbeiteten Bodens und damit zu einer links- oder rechtsseitigen Krafteinwirkung.

Des Weiteren ist bekannt, hinter dem Bodenbearbeitungsgerät eine Bodennachbearbeitungseinheit zu führen, um im gleichen Arbeitsgang zum Beispiel eine Rückverfestigung, Einebnung oder Aussaat zu ermöglichen. Beispiele solcher Bodennachbearbeitungseinheiten sind Bodenwalzen.

Bodenbearbeitungswerkzeuge, wie die vorgenannten Pflugkörper oder Scheiben, die eine der beschriebenen oder ähnliche Verlagerungen des Bodens bewirken, bringen hierfür immer eine quer zur Arbeitsrichtung gerichtete Kraft auf den Boden auf. Vom Boden wirkt auf das Bodenbearbeitungsgerät eine entgegengesetzte Kraft ein, die sich bei einer Bewegung des Bodenbearbeitungsgerät entlang der Arbeitsrichtung in einer linkswendenden Arbeitsstellung als Seitenzug nach rechts bzw. bei einer rechtwendenden Arbeitsstellung als Seitenzug nach links äußert. Sofern man verhindern will, dass das Bodenbearbeitungsgerät während der Bearbeitung des Bodens von der gewünschten Fahrspur abdriftet, müssen diese SeitenzugKräfte von dem Bodenbearbeitungsgerät selbst oder von der Zugmaschine, die das Bodenbearbeitungsgerät zieht oder schiebt, kompensiert werden.

Im Stand der Technik sind zur Aufnahme dieser Kräfte zum Beispiel an dem Bodenbearbeitungswerkzeug angebrachte Anlagen bekannt, die den Boden parallel zur Arbeitsrichtung durchstreifen und die Seitenzugkräfte aufnehmen. Solche Anlagen sind aber nicht für alle Bodenbearbeitungsgeräte sinnvoll nutzbar. Beispielsweise ist bei einem Parallelpflug zwischen den einzelnen Pflugkörpern zu wenig Bauraum, um eine ausreichend große Anzahl von Anlagen vorzusehen, oder solche Anlagen würden die Durchgängigkeit des Bodens zwischen den benachbarten Pflugkörpern eines Parallelpfluges erschweren. Zudem stellen solche Anlagen zusätzliche Verschleißteile dar.

Es ist auch bekannt, die Zugmaschine mit einer Steuerung zu versehen, die dafür sorgt, die Zugmaschine so entgegen der Auswirkung des Seitenzugs zu lenken, dass Zugmaschine und geschlepptes Bodenbearbeitungsgerät geradeaus laufen. Mitunter wird eine ständig unter Schlupf abrollende Bereifung der Zugmaschine aber hierdurch stark beansprucht und der Kraftstoffverbrauch der Zugmaschine erhöht.

Des Weiteren sind im Stand der Technik, z.B. DE 78 04 395 U1, auch am Bodenbearbeitungsgerät angebrachte Führungsräder bekannt, die dem Seitenzug entgegensteuern, welche aber den bereits bearbeiteten Boden im Bereich ihrer Fahrspuren zu sehr verdichten können.

Aus DE 101 47 595 A1 ist bekannt, eine Bodenbearbeitungskombination aus an einem Rahmen angebrachten Bodenbearbeitungswerkzeugen und einer mittig an dem Rahmen über ein Gelenk angebrachten Bodenwalze bereitzustellen. Die Bodenwalze wird schräg zur Arbeitsrichtung angestellt, um einem Hangabdrift der Bodenbearbeitungskombination zu entgegnen. Dabei läuft die Bodenwalze in der Eingriffsspur der Bodenbearbeitungswerkzeuge.

Insbesondere bei den Pflügen haben sich in der letzten Zeit sogenannte Volldrehpflüge durchgesetzt, die sowohl eine linkswendende Arbeitsstellung als auch eine rechtswendende Arbeitsstellung aufweisen, zwischen denen der Pflug umstellbar ist. Für solche Bodenbearbeitungsgeräte, die zwischen linkswendender und rechtswendender Arbeitsstellung umstellbar sind, hängt also die Richtung des Seitenzugs von der jeweiligen Arbeitsstellung ab. Folglich muss jede Maßnahme, die zur Aufnahme der Seitenkräfte getroffen wird, gleichermaßen dazu geeignet sein, sowohl nach links wirkende Kräfte als auch nach rechts wirkende Kräfte auszugleichen. Zugleich werden bei solchen Bodenbearbeitungsgeräten Teile des Bodens je nach Arbeitsstellung bezüglich der Eingriffsspur der Bodenbearbeitungswerkzeuge auf deren linker oder rechter Seite außerhalb der Eingriffsspur abgelegt.

Aus DE 34 12 512 A1 ist ein Bodenbearbeitungsgerät mit linkswendender und rechtswendender Arbeitsstellung gemäß dem Oberbegriff des Anspruchs 1 bekannt.

### DARSTELLUNG DER ERFINDUNG

Vor diesem Hintergrund besteht eine Aufgabe der vorliegenden Erfindung darin, ein Bodenbearbeitungsgerät, das sowohl eine linkswendende als auch eine rechtswendende Arbeitsstellung aufweist, mit einer daran angebrachten Bodennachbearbeitungseinheit bereitzustellen, welches ohne Seitenzug betrieben werden kann, ohne dabei die obigen Nachteile einer ungewollten Bodenverfestigung, des Verschleißes, des unökonomischen Betriebs einer zum Ziehen des Bodenarbeitsgerätes eingesetzten Zugmaschine oder einer mangelnder Überdeckung einer Bodenbearbeitungsspur zwischen Bodenbearbeitungsgerät und Bodennachbearbeitungseinheit mit sich zu bringen.

Diese Aufgabe wird durch ein Bodenbearbeitungsgerät nach Anspruch 1 gelöst. Vorteilhafte weitere Merkmale der Erfindung ergeben sich aus den Unteransprüchen.

Gemäß einem Aspekt der vorliegenden Erfindung wird ein Bodenbearbeitungsgerät mit einer Bodenbearbeitungseinheit zum Bearbeiten eines Bodens mit Bodenbearbeitungswerkzeugen entlang einer Arbeitsrichtung, bereitgestellt, die dazu ausgestaltet ist, in einer ersten Arbeitsstellung eine linkswendende Bearbeitung des Bodens und in einer zweiten Arbeitsstellung eine rechtswendende Bearbeitung des Bodens durchzuführen, wobei an der Bodenbearbeitungseinheit eine Bodennachbearbeitungseinheit mittels einer schwenkbaren Anstellmechanik derart angebracht ist, dass die Bodennachbearbeitungseinheit in Arbeitsrichtung hinter der Bodenbearbeitungseinheit angeordnet ist, wobei durch die Anstellmechanik die Bodennachbearbeitungseinheit in Bezug auf die Arbeitsrichtung seitlich versetzbar und in einem Anstellwinkel gegenüber der Arbeitsrichtung zu beiden Seiten anstellbar ist, um eine einstellbare Seitenzugkraft durch eine Wechselwirkung mit dem Boden auf das Bodenbearbeitungsgerät auszuüben.

Die Wechselwirkung mit dem Boden umfasst in diesem Zusammenhang insbesondere eine Gleitreibung, Rollreibung und eine Kombination daraus, aber auch jede andere Art der mechanischen Kraftaufnahme.

Indem die Bodennachbearbeitungseinheit mittels einer schwenkbaren Anstellmechanik an der Bodenbearbeitungseinheit angebracht ist, kann sowohl ein bei einer linkswendenden Bearbeitung des Bodens als auch ein bei einer rechtswendenden Bearbeitung des Bodens durch die Bearbeitung erzeugter Seitenzug durch die von der Bodennachbearbeitungseinheit ausgeübte Seitenzugkraft kompensiert werden. Somit wird ein Geradeauslauf des Gespanns aus Bodenbearbeitungseinheit und Bodennachbearbeitungseinheit erleichtert. Gleichzeitig wird durch das Bodenbearbeitungsgerät die Bearbeitung des Bodens durch die Bodenbearbeitungseinheit und eine zusätzliche Nachbearbeitung, beispielsweise Kultivierung oder Rückverfestigung durch die Bodennachbearbeitungseinheit in einem Arbeitsgang durchgeführt. Da die Bodennachbearbeitungseinheit in Bezug auf die Arbeitsrichtung seitlich versetzbar ist, kann sich die von ihr überfahrene Spur mit einer Bodenbearbeitungsspur der Bodenbearbeitungseinheit überdecken. Zusätzliche Mechanismen zur Aufnahme von Seitenkräften sind nicht mehr oder nur noch eingeschränkt nötig. Durch die vorliegende Erfindung, wonach die Bodennachbearbeitungseinheit sowohl seitlich versetzbar als auch in ihrem Winkel anstellbar ist, kann besonders effizient sowohl eine Seitenzugkompensation als auch eine Anpassung an die Bearbeitungsrichtung, also links und rechts, umgesetzt werden, was insbesondere bei Pflügen, Scheibeneggen und ähnlichen Bodenbearbeitungseinheiten von großem Wert ist.

Dass die Bodennachbearbeitungseinheit an der Bodenbearbeitungseinheit angebracht ist, bedeutet dass zwischen beiden Einheiten eine unmittelbare oder mittelbare Verbindung besteht. Insbesondere ist also auch umfasst, dass die Bodennachbearbeitungseinheit und die Bodenbearbeitungseinheit gemeinsam und in einer festen relativen Anordnung an einer Vorrichtung angebracht sind. Wird zum Beispiel das Bodenbearbeitungsgerät an einen Schlepper angehängt und davon gezogen und ist hierfür die Bodenbearbeitungseinheit mit dem Schlepper gekoppelt, kann die Bodennachbearbeitungseinheit direkt oder über die Bodenbearbeitungseinheit mit dem Schlepper gekoppelt sein. Im Sinne der vorliegenden Erfindung übt die Bodennachbearbeitungseinheit dann also mittelbar über den Schlepper eine einstellbare Seitenzugkraft auf das Bodenbearbeitungsgerät aus. In einem solchen Fall ist die nachfolgend beschriebene Anbringung der Bodennachbearbeitungseinheit an der Bodenbearbeitungseinheit äquivalent zu einer entsprechenden Anbringung an einem Schlepper oder dergleichen.

Bevorzugt weist die Anstellmechanik eine erste Lenkstange mit einer ersten Lenkstangen-Länge und eine zweite Lenkstange mit einer zweiten Lenkstangen-Länge auf, welche die Bodennachbearbeitungseinheit und die Bodenbearbeitungseinheit miteinander verbinden, wobei sich die erste Lenkstange zwischen einer ersten Bodenbearbeitungseinheitsanbringung an der Bodenbearbeitungseinheit und einer ersten Bodennachbearbeitungseinheitsanbringung an der Bodennachbearbeitungseinheit erstreckt und sich die zweite Lenkstange zwischen einer zweiten Bodenbearbeitungseinheitsanbringung an der Bodenbearbeitungseinheit und einer zweiten Bodennachbearbeitungseinheitsanbringung an der Bodennachbearbeitungseinheit erstreckt, wobei in einem ersten Fall die erste Lenkstange und die zweite Lenkstange in Arbeitsrichtung auseinanderlaufen, oder in einem zweiten Fall die erste Lenkstange und die zweite Lenkstange parallel zueinander verlaufen und die erste Lenkstangen-Länge und/oder die zweite Lenkstange-Länge einstellbar ist.

Bei der bevorzugten Ausgestaltung der Anstellmechanik mittels Lenkstangen ist es besonders einfach möglich, die Bodennachbearbeitungseinheit nicht nur gegenüber einer Arbeitsrichtung anzustellen, sondern auch gegenüber dem Bodenbearbeitungsgerät in Arbeitsrichtung nach links oder rechts seitlich zu versetzen. Damit kann die Bodennachbearbeitungseinheit in einer anderen Spur laufen als das Bodenbearbeitungsgerät. Zum Beispiel können die Bodenbearbeitungswerkzeuge des Bodenbearbeitungsgerätes insgesamt eine Bodenbearbeitungsbreite aufspannen, mit der sie eine Eingriffsspur ziehen, die Bodennachbearbeitungsspur aber gegenüber dieser Eingriffsspur je nach Stellung der Anstellmechanik links oder rechts darüber hinausragen. Hiermit wird bewirkt, dass eine Seitenzugkompensation mit einer Positionskompensation einhergeht, die eine effiziente und präzise Bearbeitung des Bodens ermöglicht.

Bei einer bevorzugten Ausgestaltung der Anstellmechanik nach dem ersten Fall wird durch die erste Lenkstange, eine Verbindungslinie zwischen den Bodenbearbeitungseinheitsanbringungen, die zweite Lenkstange und eine Verbindungslinie zwischen den Bodennachbearbeitungseinheitsanbringungen ein Lenktrapez gebildet. In dieser vorteilhaften Ausführungsform kann in einer Neutralstellung der Anstellmechanik, **d.h.** einer Stellung, in welcher der Anstellwinkel gegenüber der Arbeitsrichtung etwa null ist, eine Bodennachbearbeitungseinheitsachse senkrecht zur Arbeitsrichtung und parallel zu einer Bodenbearbeitungseinheitsachse verlaufen. Sobald die Bodennachbearbeitungseinheit gegenüber der Neutralstellung ausgelenkt wird, d.h. ihre neutrale Bodennachbearbeitungsspur verlässt, erfolgt zugleich eine Anstellung gegenüber der Arbeitsrichtung, die eine Seitenzugkraft der Bodennachbearbeitungseinheit als Kompensation einer Seitenzugkraft durch die links- bzw. rechtswendende Bearbeitung durch die Bodenbearbeitungseinheit zur Folge hat. Wird die Bodennachbearbeitungseinheit aus der Neutralstellung geschwenkt stellt das bevorzugte Lenktrapez der Anstellmechanik sicher, dass sich der Momentanpol der von den Lenkstangen geführten Schwenkbewegung der Bodennachbearbeitungseinheit immer in Arbeitsrichtung hinter der Bodennachbearbeitungseinheit befindet.

Auch bei einer bevorzugten Ausgestaltung der Anstellmechanik nach dem zweiten Fall, wird durch die unterschiedlich einstellbaren Lenkstangen-Längen der Anstellwinkel einstellbar.

Bevorzugt ist bei einem Bodenbearbeitungsgerät, das Lenkstangen aufweist, die erste Bodennachbearbeitungseinheitsanbringung und die zweite Bodennachbearbeitungseinheitsanbringung in Arbeitsrichtung so an der Bodennachbearbeitungseinheit angeordnet, dass sich die Bodennachbearbeitungseinheit zum größten Teil in Arbeitsrichtung vor oder hinter der ersten Bodennachbearbeitungseinheitsanbringung und der zweiten Bodennachbearbeitungseinheitsanbringung befindet.

Der seitliche Versatz der Bodennachbearbeitungseinheit wird insbesondere durch die Länge der Lenkstangen festgelegt. Wenn die Bodennachbearbeitungseinheitsanbringungen möglichst weit hinten an der Bodennachbearbeitungseinheit angeordnet sind, sich die Bodennachbearbeitungseinheit also zum größten Teil in Arbeitsrichtung vor der ersten und zweiten Bodennachbearbeitungseinheitsanbringung befindet, können die Bodenbearbeitungseinheit und die Bodennachbearbeitungseinheit dichter aneinandergerückt sein und kann ein freier Raum zwischen ihnen minimiert werden. Gleichzeitig ist jedoch eine große Länge der Lenkstangen gewährleistet, um den gewünschten seitlichen Versatz sicherzustellen. Eine Länge des Bodenbearbeitungsgeräts fällt in dieser vorteilhaften Ausführungsform also kürzer aus und das Bodenbearbeitungsgerät wird hierdurch leichter anzuheben und zu wenden. Wenn sich die Bodennachbearbeitungseinheit zum größten Teil in Arbeitsrichtung hinter der ersten und zweiten Bodennachbearbeitungseinheitsanbringung befindet, ist demgegenüber eine höhere Festigkeit der Gesamtanordnung zu erwarten, was vor allem dann ein Vorteil ist, wenn die Bodennachbearbeitungseinheit relativ große Kräfte aufnehmen muss.

Bevorzugt ist die Bodenbearbeitungseinheit ein Pflug, weiter bevorzugt ein Drehpflug, besonders bevorzugt ein Volldrehpflug, ganz besonders bevorzugt ein Volldrehparallelpflug, wobei die Bodenbearbeitungswerkzeuge Pflugkörper sind. Bei diesen Bodenbearbeitungseinheiten ist es besonders vorteilhaft, dass die Bodennachbearbeitungseinheit nicht nur anstellbar, sondern auch seitlich versetzbar ist.

Bevorzugt ist die die Bodennachbearbeitungseinheit dazu ausgebildet, eine Rückverfestigung, Einebnung oder Aussaat zu bewirken, und ist insbesondere eine Packerwalze, Stabwalze, Messerwalze, Tiefenführungswalze, Kreiselegge, Messerschiene, Zinkenschiene, Planierschiene oder Säschiene.

In dieser bevorzugten Ausführungsform dient die Bodennachbearbeitungseinheit zusätzlich zu einer effizienten Kompensation des Seitenzugs auch einer besonders effizienten Rückverfestigung und Kultivierung des Bodens. Eine erneute Überfahrt des Bodens zur Durchführung einer Rückverfestigung, Einebnung oder Aussaat kann dann entfallen, wodurch zum Beispiel die Bestellung einer Ackeranbaufläche sehr viel effizienter erfolgen kann.

Bevorzugt ist eine Arbeitstiefe der Bodenbearbeitungswerkzeuge, vorzugsweise gegenüber der Bodennachbearbeitungseinheit, einstellbar.

Dadurch dass die Arbeitstiefe der Bodenbearbeitungswerkzeuge einstellbar ist, lässt sich diese passend zu unterschiedlichen Gegebenheiten des Bodens und einem gewünschten Bearbeitungsbild anpassen. Die Arbeitstiefe der Bodenbearbeitungswerkzeuge und deren dadurch in ihrem Ausmaß veränderliche Wechselwirkung mit dem Boden kann zudem eine Auswirkung auf die Stärke des von den Bodenbearbeitungswerkzeugen hervorgerufenen Seitenzugs haben. Im Allgemeinen wird der Seitenzug der Bodenbearbeitungseinheit umso größer, je tiefer der Boden bearbeitet wird, d.h. je tiefer die Arbeitstiefe der Bodenbearbeitungswerkzeuge eingestellt ist.

Gleichermaßen gilt für die durch die Bodennachbearbeitungseinheit ausgeübte Seitenzugkraft, dass diese umso größer wird, je mehr die Bodennachbearbeitungseinheit in Wechselwirkung mit dem Boden tritt. Wenn die Arbeitstiefe in einer bevorzugten Ausführungsform gegenüber der Bodennachbearbeitungseinheit einstellbar ist, bedeutet dies also, dass der von den Bodenbearbeitungswerkzeugen hervorgerufene Seitenzug und der von der Bodennachbearbeitungseinheit hervorgerufene kompensierende Seitenzug unabhängig voneinander einstellbar sind.

In einer weiter bevorzugten Ausführungsform weist die Anstellmechanik für ein relatives Einstellen und/oder Verändern der Arbeitstiefe der Bodenbearbeitungswerkzeuge gegenüber der Bodennachbearbeitungseinheit unabhängig vom eingestellten Anstellwinkel eine Höhenführung, insbesondere eine Parallelogramm-Höhenführung, auf. Hierdurch ist es insbesondere möglich, eine von der Bodennachbearbeitungseinheit auf den Boden aufgebrachte Kraft und damit eine mögliche Wechselwirkung mit dem Boden einzustellen.

Bevorzugt weist das Bodenbearbeitungsgerät einen ersten Endanschlag und einen zweiten Endanschlag für die Anstellmechanik auf, durch den der jeweilige Anstellwinkel nach links und rechts bezogen auf die Arbeitsrichtung voreinstellbar ist, wobei der Anstellwinkel insbesondere durch Umstellen der Anstellmechanik zwischen dem ersten Endanschlag und dem zweiten Endanschlag zwischen rechts und links umstellbar ist.

Der Anstellwinkel bezogen auf die Arbeitsrichtung nimmt großen Einfluss auf das Maß der durch die Bodennachbearbeitungseinheit aufgebrachten Seitenzugkraft. Zusammen mit der Wechselwirkung der Bodennachbearbeitungseinheit mit dem Boden, insbesondere Schlupf, Gleitreibung etc., bestimmt er das Maß der Seitenzugkraft. Dadurch dass die Anstellmechanik zwei Endanschläge aufweist, durch den der jeweilige Anstellwinkel voreinstellbar ist, kann in einer vorteilhaften Ausführungsform das Maß der Seitenzugkraft nach links und rechts voreingestellt werden. Wenn insbesondere der Anstellwinkel durch Umstellen der Anstellmechanik zwischen den beiden Endanschlägen umstellbar ist, lässt sich bei einem Umstellen zwischen rechtswendender und linkswendender Arbeitsstellung des Bodenbearbeitungsgerätes die von der Bodennachbearbeitungseinheit aufgebrachte Seitenzugkraft effizient und sehr genau umstellen, indem die Anstellmechanik in die Position des jeweiligen Endanschlags gebracht wird.

Bevorzugt ist bei einem Bodenbearbeitungsgerät, das nach einer der vorgenannten bevorzugten Ausführungsformen eine erste und zweite Lenkstange aufweist, der Anstellwinkel variabel einstellbar, insbesondere indem ein erster Anbringungsabstand zwischen der ersten Bodenbearbeitungseinheitsanbringung und der zweiten Bodenbearbeitungseinheitsanbringung variabel einstellbar ist, insbesondere indem ein zweiter Anbringungsabstand zwischen der ersten Bodennachbearbeitungseinheitsanbringung und der zweiten Bodennachbearbeitungseinheitsanbringung variabel einstellbar ist und/oder insbesondere indem die erste Lenkstangen-Länge und/oder die zweite Lenkstangen-Länge variabel einstellbar ist.

Mit einem variabel einstellbaren Anstellwinkel kann die Seitenzugkraft variabel angepasst werden. Dazu kann bevorzugt der Anbringungsabstand zwischen den Bodenbearbeitungseinheitsanbringungen verstellt werden. Je kleiner dieser Abstand ist, desto weniger Auslenkung der Lenkstangen aus ihren Neutralstellungen ist erforderlich, um einen bestimmten Anstellwinkel einzustellen. Alternativ oder in Kombination hiermit kann ein Anbringungsabstand der Bodennachbearbeitungseinheitsanbringungen verstellt werden. Je kleiner dieser Abstand ist, desto weniger Auslenkung der Lenkstangen aus ihren Neutralstellungen ist erforderlich, um einen bestimmten Anstellwinkel einzustellen. Alternativ oder in Kombination hiermit kann die erste und/oder die zweite Lenkstangen-Länge verändert werden. Je länger die Lenkstangen sind, desto weniger Effekt hat eine Auslenkung der Lenkstangen aus ihren Neutralstellungen auf den Anstellwinkel. In diesem Fall nähert sich bildlich gesprochen ein von den Lenkstangen und den Anbringungsabständen aufgespanntes Lenktrapez einem Parallelogramm an, sodass eine Auslenkung der Lenkstangen zwar eine seitliche Versetzung der Bodennachbearbeitungseinheit bezogen auf die Arbeitsrichtung zur Folge hat, aber mit dieser seitlichen Versetzung nur noch ein kleinerer Anstellwinkel einhergeht. Wird eine Lenkstange im Verhältnis zur anderen Lenkstange verkürzt oder verlängert, kann der Anstellwinkel ebenfalls beeinflusst werden.

Bevorzugt ist bei der oben genannte Ausführungsform mit variabel einstellbarem Anstellwinkel der Anstellwinkel mechanisch durch festgelegte Rastpositionen, mechanisch durch Federvorspannung, durch einen Stellmotor durch Steuerung durch einen Bediener und/oder hydraulisch durch automatische Steuerung variabel einstellbar.

Den Anstellwinkel durch mechanische festgelegte Rastpositionen variabel einstellbar zu gestalten, ist eine relativ kostengünstige und wartungsarme Möglichkeit, die variable Einstellbarkeit des Anstellwinkels sicherzustellen. So können zum Beispiel die Anbringungspunkte der Lenkstangen an der Bodenbearbeitungseinheit und/oder an der Bodennachbearbeitungseinheit über ein Lochbild einstellbar sein. Denkbar ist auch, dass eine Lenkstange zwei oder mehr Stangen umfasst, die zueinander verschiebbar sind und von denen mindestens eine Stange ein Lochraster aufweist und die anderen Stange zumindest ein Loch, wobei die relative Position der Stangen durch einen Bolzen festgehalten ist, der in das Loch der einen Stange und eins der Löcher des Lochrasters der anderen Stange eingreift. Es sind auch weitere, ähnliche Mechanismen zum Einstellen der Positionen der Anbringungspunkte der Lenkstangen oder zum Einstellen der Länge der Lenkstangen einsetzbar.

Alternativ oder in Kombination mit einer mechanischen Festsetzung der eingestellten Lenkstangenlängen kann eine Feder dazu genutzt werden, die Anbringungsabstände der Lenkstangen vorzugeben. Die Einstellbarkeit des Anstellwinkels wird dann dadurch erreicht, eine Spannung der Feder zu vergrößern oder verkleinern. In einer bevorzugten Ausführungsform kann ein Bediener alternativ oder ergänzend zur mechanischen Verstellung den Anstellwinkel durch einen Stellmotor einstellen. Wird zum Beispiel das Bodenbearbeitungsgerät von einem Schlepper gezogen und der Führer des Schleppers stellt fest, dass ein Seitenzug auf den Schlepper aufgrund des Bodenbearbeitungsgerätes einwirkt, kann er den Anstellwinkel während der Fahrt durch Betätigen einer Steuerung für den Stellmotor nachkorrigieren, ohne dafür die Arbeit unterbrechen zu müssen. In einer weiter bevorzugten Ausführungsform kann alternativ oder ergänzend zu vorgenannten Einstellmechanismen der Anstellwinkel vollautomatisch durch eine Hydraulik geregelt werden. Beispielsweise kann in Abhängigkeit von erfassten Betriebsdaten eines Schleppers, wie zum Beispiel einer Verteilung des Schlupfs zwischen linken und rechten Rädern des Schleppers, der Zugkräfte auf einen Unterlenkerkraftmessbolzen des Schleppers oder einer Winkelstellung der Vorderräder des Schleppers, die vorzugsweise auf einem Datenbus des Schleppers abgegriffen werden, der Anstellwinkel vollautomatisch eingestellt und/oder bei Bedarf fortlaufend adaptiert werden. Dies ermöglicht einen besonders ökonomischen Betrieb des Bodenbearbeitungsgerätes.

Bevorzugt ist die Anstellmechanik dazu ausgestaltet, über einen Zwangsantrieb oder eine Folgeschaltung ein Anstellen der Bodennachbearbeitungseinheit aufgrund eines Umstellens der Bodenbearbeitungseinheit zwischen der ersten Arbeitsstellung und der zweiten Arbeitsstellung zu bewirken.

In dieser bevorzugten Ausführungsform löst das Umstellen der Arbeitsstellung der Bodenbearbeitungseinheit zwischen rechtswendender und linkswendender Bearbeitung des Bodens ein entsprechendes Anstellen und Versetzen der Bodennachbearbeitungseinheit aus. So kann zum Beispiel beim Umstellen von der linkswendenden Bearbeitung zur rechtswendenden Bearbeitung die Bodennachbearbeitungseinheit automatisch nach rechts angestellt und versetzt werden. Dieser Vorgang kann vorteilhafterweise im Wesentlichen gleichzeitig zum Umstellvorgang passieren.

Bevorzugt ist das Bodenbearbeitungsgerät aus zumindest einer der Arbeitsstellungen in eine Transportstellung klappbar, in der die Bodennachbearbeitungseinheit sich hauptsächlich vertikal erstreckt und in der es eine Transporthöhe aufweist.

"Sich hauptsächlich vertikal erstrecken" bedeutet in diesem Zusammenhang, dass eine Ausdehnung der Bodennachbearbeitungseinheit in der vertikalen Richtung größer ist als in der horizontalen Richtung.

Dadurch, dass sich die Bodennachbearbeitungseinheit in einer Transportstellung des Bodenbearbeitungsgerätes vertikal erstreckt, ist es möglich, auch bei einer Bodennachbearbeitungseinheit, deren Arbeitsbreite eine zulässige Straßentransportbreite überschreitet, eine Transportbreite des Bodenbearbeitungsgerätes zu gewährleisten, die eine zulässige Straßentransportbreite nicht überschreitet. Die bevorzugte Ausgestaltung der Anstellmechanik erlaubt es dabei, die Transportstellung so einzunehmen, dass nicht nur die zulässige Straßentransportbreite eingehalten wird, sondern auch vermieden wird, dass das Bodenbearbeitungsgerät länger als nötig wird. Die für die Benutzung öffentlicher Straßen maximal erlaubte Breite eines Fahrzeuges beträgt in großen Teilen Europas 3 m. Bevorzugt ist die Breite des Bodenbearbeitungsgeräts in der Transportstellung maximal die maximal zulässige Straßentransportbreite, insbesondere 3 m.

In einer weiter bevorzugten Ausführungsform ist die Anstellmechanik dazu ausgestaltet, die vertikale Position der Bodennachbearbeitungseinheit optional mittels einer Federmechanik einzustellen, um insbesondere eine zulässige Straßentransporthöhe in der Transportstellung nicht zu überschreiten. Die maximal zulässige Straßentransporthöhe beträgt in großen Teilen Europas 4 m. In einer bevorzugten Ausführungsform ist die Anstellmechanik dazu ausgestaltet, die vertikale Position der Bodennachbearbeitungseinheit so einzustellen, dass die Transporthöhe maximal die maximal zulässige Straßentransporthöhe ist, insbesondere 4 m.

Bevorzugt trägt die Bodenbearbeitungseinheit des Bodenbearbeitungsgeräts, welches Lenkstangen aufweist, die Bodenbearbeitungswerkzeuge an zumindest drei Querrahmen, die sich zu einer Arbeitsbreite erstrecken. Dabei ist für mindestens zwei der Querrahmen jeweils eine Anstellmechanik vorgesehen ist, mittels derer jeweils eine Bodennachbearbeitungseinheit an dem jeweiligen Querrahmen angebracht ist und die jeweils die erste Lenkstange und die zweite Lenkstange aufweist.

Bei einer Bodenbearbeitungseinheit, die zumindest drei Querrahmen aufweist, die sich zu einer Arbeitsbreite erstrecken, müsste bei Vorhandensein nur einer einzigen Bodennachbearbeitungseinheit diese so dimensioniert sein, dass sie die ganze Arbeitsbreite nachbearbeiten kann. Eine entsprechend breite Bodennachbearbeitungseinheit würde zum einen eine Anstellmechanik erfordern, die in der Lage ist, eine so große Bodennachbearbeitungseinheit zu versetzen, zum anderen würde bei einem gegebenen Anstellwinkel die angestellte Bodennachbearbeitungseinheit die Länge des Bodenbearbeitungsgeräts vergrößern. Es ist daher vorteilhaft, zumindest für die beiden äußeren Querrahmen getrennte Bodennachbearbeitungseinheiten vorzusehen, die jeweils über ihre eigene Anstellmechanik verfügen und sich zusammen zur Arbeitsbreite ergänzen.

In der oben beschriebenen vorteilhaften Ausführungsform, in der das Bodenbearbeitungsgerät in eine Transportstellung klappbar ist, sind dann vorzugsweise die beiden äußeren Querrahmen der Bodenbearbeitungseinheit in eine Transportstellung bringbar, in der sich die Querrahmen und ihre zugehörigen Bodennachbearbeitungseinheiten dann im Wesentlichen senkrecht erstrecken. In dieser besonders vorteilhaften Ausführungsform kann sowohl eine breite Arbeitsbreite als auch eine schmale Transportbreite gewährleistet werden.

Bevorzugt umfasst die Bodennachbearbeitungseinheit ferner ein Führungswerkzeug, insbesondere eine Scheibenseche und/oder eine Anlage, das bevorzugt mit dem Boden in Wechselwirkung bringbar ist, um die Seitenzugkraft zu beeinflussen, d.h. zu vergrößern oder zu verkleinern.

Wenn beispielsweise die von der Bodennachbearbeitungseinheit ausgeübte Seitenkraft nicht ausreichend ist, um einen Geradeauslauf des Bodenbearbeitungsgeräts sicherzustellen, kann in der bevorzugten Ausführungsform eine vergrößerte Kraft durch zusätzliche Führungswerkzeuge aufgebracht werden. Besonders bevorzugt sind diese zusätzlichen Führungswerkzeuge nicht dauerhaft mit dem Boden in Wechselwirkung, sondern können nur bei Bedarf mit eingesetzt werden.

### KURZE FIGURENBESCHREIBUNG

Fig. 1 zeigt eine Draufsicht eines Volldrehparallelpfluges in linkswendender Arbeitsstellung mit einer Packerwalze als Beispiel eines bevorzugten Bodenbearbeitungsgerätes.
Fig. 2 zeigt eine Draufsicht des Bodenbearbeitungsgerät aus Fig. 1 mit dem Volldrehparallelpflug in rechtswendender Arbeitsstellung.
Fig. 3 zeigt eine weitere Draufsicht des Bodenbearbeitungsgeräts aus Fig. 2.
Fig. 4 zeigt eine Seitenansicht des Bodenbearbeitungsgeräts aus Fig. 1.
Fig. 5 zeigt eine Seitenansicht einer weiteren Ausführungsform eines Bodenbearbeitungsgeräts in einer Transportstellung.

### WEGE ZUR AUSFÜHRUNG DER ERFINDUNG

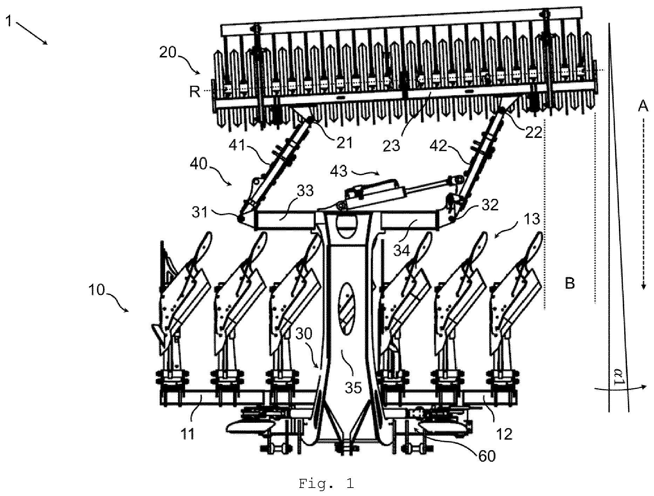

Fig. 1 zeigt eine Draufsicht eines Bodenbearbeitungsgeräts 1 mit einer Bodenbearbeitungseinheit 10, nämlich einem Volldrehparallelpflug, mit einem Bodenbearbeitungsgeräterahmen 60, an dem ein erster Querrahmen 11 und ein zweiter Querrahmen 12 über je eine Wendeachse drehbar befestigt sind. Die Querrahmen 11, 12 lassen sich separat, unabhängig voneinander um ihre Wendeachse im Wesentlichen um 180° drehen. In einer ersten Arbeitsstellung erstrecken sich somit die Querrahmen 11, 12 im Wesentlichen quer zu einer Arbeitsrichtung A der Bodenbearbeitungseinheit 10 und im Wesentlichen parallel zum zu bearbeitenden Boden, der sich parallel zur Zeichnungsebene der Fig. 1 unterhalb des Bodenbearbeitungsgeräts 1 befindet.

In einer zweiten Arbeitsstellung befinden sich die Querrahmen 11, 12 in einer gegenüber der ersten Arbeitsstellung um 180° gedrehten Stellung. Die Querrahmen 11, 12 tragen Pflugkörper als Beispiele für Bodenbearbeitungswerkzeuge 13. Zu den Pflugkörpern zählen sowohl linkswendende als auch rechtswendende Pflugkörper, und jeweils ein linkswendender und ein rechtswendender Pflugkörper bilden ein Pflugkörperpaar. In der ersten Arbeitsstellung der Bodenbearbeitungseinheit 10 treten nur die linkswendenden Pflugkörper mit dem Boden in Wechselwirkung, in der zweiten Arbeitsstellung nur die rechtswendenden Pflugkörper. Die in Fig. 1 gezeigte Arbeitsstellung der Bodenbearbeitungseinheit 10 ist die linkswendende Arbeitsstellung, **d.h.** ein Bodenbalken der von einem Pflugkörper aufgenommen wird, wird in Arbeitsrichtung A gesehen weiter links von seiner ursprünglichen Position auf dem Boden abgelegt. Der am weitesten links gelegene Pflugkörper legt seinen Bodenbalken dabei sogar außerhalb der Arbeitsbreite der Bodenbearbeitungseinheit 10 in einem linken Seitenbereich B ab. Diese Wechselwirkung der Pflugkörper mit dem Boden, die zu einem Bewegen des Bodenbalkens nach links führt, verursacht einen in Arbeitsrichtung A nach rechts gerichteten Seitenzug der Bodenbearbeitungseinheit 10.

Das Bodenbearbeitungsgerät 1 weist zudem eine Anhängevorrichtung 30 auf, die mit dem Bodenbearbeitungsgeräterahmen 60 verbunden ist. Die Anhängevorrichtung 30 verläuft dabei in einem mittleren Bereich vom Bodenbearbeitungsgeräterahmen 60 nach hinten. Die Anhängevorrichtung 30 überragt und überspannt die Pflugkörper brückenartig. In der in Fig. 1 gezeigten Draufsicht erscheint die Anhängevorrichtung 30 im Wesentlichen T-förmig, wobei sich ein erster Querbalken 33 und ein zweiter Querbalken 34, oder ein einziger durchgehender Querbalken, zu beiden Seiten eines Längsträgers 35 der Anhängevorrichtung 30 hinter den Pflugkörpern quer zu Arbeitsrichtung A, also parallel zum Bodenbearbeitungsgeräterahmen 60, jeweils zu einem freien Ende erstrecken. An dem freien Ende des ersten Querbalkens 33 befindet sich eine Bodenbearbeitungseinheitsanbringung 31 und an dem freien Ende des zweiten Querbalkens 34 befindet sich eine Bodenbearbeitungseinheitsanbringung 32.

In dem in Fig. 1 gezeigten Ausführungsbeispiel ist die Bodennachbearbeitungseinheit 20 als Packerwalze ausgeführt. Diese befindet sich hinter den Pflugkörpern. Bei der Bearbeitung des Bodens dreht sich die Packerwalze um eine Rotationachse R. An einem Querrahmen 23 der Packerwalze, der im Wesentlichen parallel zur Rotationsachse R verläuft, befinden sich Bodennachbearbeitungseinheitsanbringungen 21 und 22.

In der dargestellten linkswendenden Arbeitsstellung des Volldrehparallelpfluges ist die Packerwalze mittels einer Anstellmechanik 40 gegenüber der Arbeitsrichtung A in einem linken Anstellwinkel α1 angestellt. Die Rotationsachse R steht somit nicht senkrecht zur Arbeitsrichtung A. Die Anstellmechanik 40 weist eine erste Lenkstange 41 und eine zweite Lenkstange 42 auf, die beide die gleiche Länge haben. Ein Ende der Lenkstange 41 ist mittels der Bodenbearbeitungseinheitsanbringung 31 mit dem ersten Querbalken 33 schwenkbar verbunden, während das andere Ende der Lenkstange 41 mittels der Bodennachbearbeitungseinheitsanbringung 21 mit der Packerwalze schwenkbar verbunden ist. Ein Ende der Lenkstange 42 ist mittels der Bodenbearbeitungseinheitsanbringung 32 mit dem ersten Querbalken 34 schwenkbar verbunden, während das andere Ende der Lenkstange 42 mittels der Bodennachbearbeitungseinheitsanbringung 22 mit der Packerwalze schwenkbar verbunden ist. Die Packerwalze, also die Bodennachbearbeitungseinheit 20, wird in der gezeigten Konfiguration also mit den beiden Lenkstangen 41, 42 am Volldrehparallelpflug, also der Bodenbearbeitungseinheit 10, so angebracht, dass sie sich hinter den Pflugkörpern, also den Bodenbearbeitungswerkzeugen 13, befindet. Durch Bewegen der Lenkstangen 41, 42 kann ein Verschwenken der Packerwalze bewirkt und geführt werden.

Die Ausgestaltung der Anstellmechanik 40 mittels zweier Lenkstangen 41, 42 ermöglicht es, die Packerwalze anzustellen und gleichzeitig so seitlich zu versetzen, dass eine Seite der Packerwalze die Pflugkörper zur linken Seite in dem linken Seitenbereich B überragt, d.h. aus der Arbeitsbreite der Bodenbearbeitungswerkzeuge 13 seitlich hinausragt. Die Packerwalze ist also nicht fluchtend zu der Bodenbearbeitungseinheit 10 angeordnet. Hierdurch wird erreicht, dass ein vom äußerst linken Pflugkörper bearbeiteter und nach links gewendeter Bodenbalken, der im Wesentlichen in den linken Seitenbereich B links der Pflugkörper abgelegt wird, von der Packerwalze zur Nachbearbeitung, z.B. Rückverfestigung, erfasst wird.

In der in Fig. 1 gezeigten Ausführungsform sind die Bodenbearbeitungseinheitsanbringungen 31, 32 an der Anhängevorrichtung 30 vorgesehen, die sich nach hinten über die Bodenbearbeitungswerkzeuge 13 erstreckt. Es sind jedoch auch andere Ausführungsformen denkbar, bei denen die beiden Bodenbearbeitungseinheitsanbringungen 31, 32 an zwei getrennten Anhängevorrichtungen angeordnet sind, die sich an den beiden Enden des Bodenbearbeitungsgeräterahmens 60 im Wesentlichen vertikal in die Höhe erstrecken. In einer solchen Ausführungsform überspannen dann die Lenkstangen 41, 42 die Bodenbearbeitungswerkzeuge 13. Es sind aber auch andere Ausführungsformen denkbar, in denen sich die Wendeachsen der beiden Querrahmen 11, 12 so weit nach hinten erstrecken, dass sie ein freies Ende hinter den Bodenbearbeitungswerkzeugen 13 aufweisen. An diesen freien Enden können dann die Bodenbearbeitungseinheitsanbringungen 31, 32 vorgesehen sein, d.h. die Wendeachsen übernehmen zugleich die Funktion einer Anhängevorrichtung.

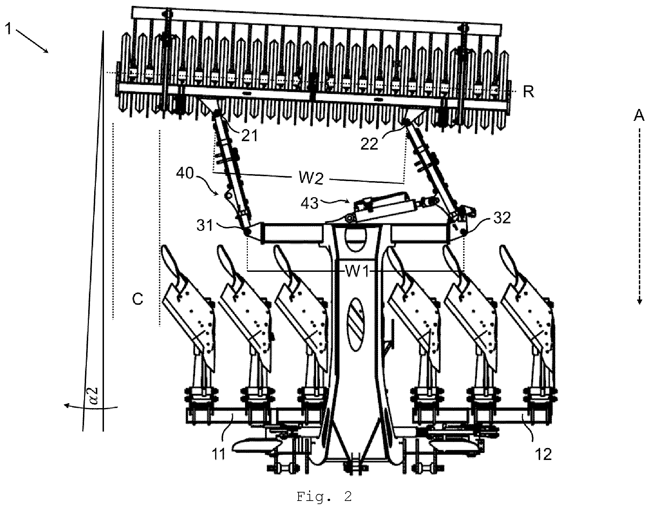

Fig. 2 zeigt eine Draufsicht des oben beschriebenen Bodenbearbeitungsgeräts 1 in rechtswendender Arbeitsstellung. Gegenüber der linkswendenden Arbeitsstellung sind nun die Querrahmen 11 und 12 um 180° um ihre parallel zur Arbeitsrichtung A verlaufende Wendeachse gedreht, was zur Folge hat, dass nun die rechtswendende Arbeitsstellung der Pflugkörper zur Bearbeitung des Bodens eingesetzt wird. Zudem ist die Packerwalze mit der Anstellmechanik 40 um einen rechten Anstellwinkel α2 gegenüber der Arbeitsrichtung A angestellt. Dieser hat zwar den gleichen Betrag wie der Anstellwinkel α1, die Auslenkrichtung zeigt jedoch nun nach rechts. Die Rotationsachse R ist also im Uhrzeigersinn um den Winkel α2 gegenüber einer Senkrechten zur Arbeitsrichtung A gedreht. Gleichzeitig ist die Packerwalze zur rechten Seite der Bodenbearbeitungseinheit 10, d.h. des Volldrehparallelpfluges, versetzt. Somit ist gewährleistet, dass die Packerwalze in rechtswendender Arbeitsstellung des Volldrehparallelpfluges auch einen rechten Seitenbereich C rechts der Pflugkörper überfährt und nachbearbeitet, z.B. rückverfestigt, in den ein am weitesten rechts angeordneter Pflugkörper den von ihm bearbeiteten und nach rechts gewendeten Bodenbalken ablegt.

Dadurch dass die Rotationsachse R der Packerwalze nicht senkrecht zur Arbeitsrichtung A steht, übt die Packerwalze im Betrieb eine Seitenzugkraft auf die Bodenbearbeitungseinheit 10 aus, wie im Folgenden am Beispiel der linkswendenden Arbeitsstellung verdeutlicht wird. Eine analoge Überlegung trifft auf die rechtswendende Arbeitsstellung zu.

Die linkswendende Arbeitsstellung bedeutet, dass die Bodenbearbeitungswerkzeuge 13 der Bodenbearbeitungseinheit 10 den Boden nach links wenden, was zu einem Seitenzug der Bodenbearbeitungseinheit 10 nach rechts führt. In der linkswendenden Arbeitsstellung aus Fig. 1 ist die Bodennachbearbeitungseinheit 20, hier also die Packerwalze, in einem Anstellwinkel α1 gegenüber der Arbeitsrichtung A nach links angestellt, was aufgrund ihrer Wechselwirkung mit dem Boden zu einer nach links gerichteten Seitenzugkraft führt. Anders ausgedrückt zieht der Volldrehparallelpflug das Bodenbearbeitungsgerät 1 nach rechts, während die Packerwalze das Bodenbearbeitungsgerät 1 nach links zieht. Die Größe der Seitenzugkraft der Bodennachbearbeitungseinheit 20 kann in gewissem Rahmen über die Größe des Anstellwinkels α1 und über die Kraft, mit der die Bodennachbearbeitungseinheit 20 in Wechselwirkung mit dem Boden tritt, eingestellt werden. Bei geeigneter Wahl des Anstellwinkels kann mittels der Packerwalze ein Geradeauslauf des Bodenbearbeitungsgeräts 1 gewährleistet werden.

Die Lenkstangen 41 und 42 sind beim Bodenbearbeitungsgerät 1, das in Fig. 1 und Fig. 2 gezeigt ist, so angeordnet, dass sie in Arbeitsrichtung A auseinanderlaufen. Das bedeutet, dass ein Abstand zwischen beiden Lenkstangen 41 und 42 nach vorne hin größer wird. Anders ausgedrückt ist, wie in Fig. 2 dargestellt ist, ein erster Anbringungsabstand W1 zwischen den Bodenbearbeitungseinheitsanbringungen 31 und 32, der dem Abstand zwischen den vorderen Enden der Lenkstangen 41 und 42 entspricht, größer als ein zweiter Anbringungsabstand W2 zwischen den Bodennachbearbeitungseinheitsanbringungen 21 und 22, der dem Abstand zwischen den hinteren Enden der Lenkstangen 41 und 42 entspricht. Die Längen der Lenkstangen 41 und 42 sind in dieser Ausführungsform gleich, so dass die erste und zweite Bodenbearbeitungseinheitsanbringung 31, 32 und die erste und zweite Bodennachbearbeitungseinheitsanbringung 21 und 22 insbesondere in einer Neutralstellung der Packerwalze, in der die Rotationsachse R senkrecht zur Arbeitsrichtung A steht, ein Lenktrapez aufspannen.

Mit dieser Ausgestaltung der Lenkstangen 41 und 42 ist gewährleistet, dass die Anstellmechanik 40 die Packerwalze gleichzeitig zu einer Seite des Bodenbearbeitungsgeräts 1 versetzt und in einem Anstellwinkel in der gleichen Richtung anstellt.

Um ein Umstellen der Packerwalze zu ermöglichen, weist die Anstellmechanik 40 einen Hydraulikzylinder 43 auf. Dieser ist an einem ersten Ende über ein Gelenk mit der zweiten Lenkstange 42 und an einem zweiten, anderen Ende über ein weiteres Gelenk mit einem oder beiden der Querbalken 33, 34 verbunden.

In der in Fig. 1 gezeigten linkswendenden Arbeitsstellung des Bodenbearbeitungsgeräts 1 befindet sich der Hydraulikzylinder 43 in einer ersten, ausgefahrenen Stellung, die ein Versetzen und ein Anstellen der Packerwalze nach links zur Folge hat. Diese erste Stellung entspricht einem ersten Endanschlag mit Anstellwinkel α1. Die von der Packerwalze ausgeübte Seitenzugkraft wird durch die Anstellmechanik 40 auf die Anhängevorrichtung 30 übertragen.

In der in Fig. 2 gezeigten Arbeitsstellung des Bodenbearbeitungsgeräts 1 befindet sich der Hydraulikzylinder 43 in einer zweiten, eingefahrenen Stellung, die ein Versetzen und ein Anstellen der Packerwalze nach rechts zur Folge hat. Diese zweite Stellung entspricht einem zweiten Endanschlag mit Anstellwinkel α2. Die von der Packerwalze ausgeübte Seitenzugkraft wird auch in der zweiten Stellung durch die Anstellmechanik 40 auf die Anhängevorrichtung 30 übertragen.

Der erste und zweite Endanschlag muss aber nicht notwendigerweise der ausgefahrenen bzw. eingefahrenen Stellung des Hydraulikzylinders 43 entsprechen, sondern es können gegebenenfalls auch Zwischenstellungen als Arbeitsstellung definiert werden. Durch ein Anpassen des ersten und zweiten Endanschlags sind die Anstellwinkel α1, α2 anpassbar.

Der Anstellwinkel ist jedoch auch durch eine Änderung der Geometrie des von der ersten und zweiten Bodenbearbeitungseinheitsanbringung 31 und 32 und von der ersten und zweiten Bodennachbearbeitungseinheitsanbringung 21 und 22 aufgespannten Lenktrapezes einstellbar, beispielsweise durch eine Änderung der Längen der ersten und zweiten Lenkstange 41, 42.

Es ist zudem auch denkbar, nicht nur einen Hydraulikzylinder 43 vorzusehen, der mit der zweiten Lenkstange 42 verbunden ist, sondern einen zweiten Hydraulikzylinder, der mit der ersten Lenkstange 41 verbunden ist. So kann eine bessere und gleichmäßigere Kraftverteilung auf die Lenkstangen 41, 42 sichergestellt und insgesamt mehr Kraft bei gleicher Grundkonstruktion aufgebracht werden.

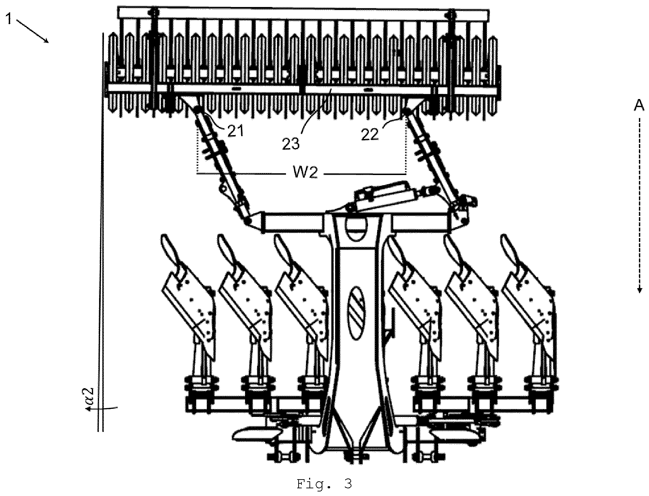

Fig. 3 zeigt das oben beschriebe Bodenbearbeitungsgerät 1 in einer weiteren rechtwendenden Arbeitsstellung. Im Vergleich zur rechtswendenden Arbeitsstellung aus Fig. 2 ist der zweite Anbringungsabstand W2 zwischen der ersten Bodennachbearbeitungseinheitsanbringung 21 und der zweiten Bodennachbearbeitungseinheitsanbringung 22 größer und damit näher am ersten Anbringungsabstand W1. Mit anderen Worten nähert sich das Lenktrapez, das durch die erste und zweite Bodenbearbeitungseinheitsanbringung 31 und 32 und die erste und zweite Bodennachbearbeitungseinheitsanbringung 21 und 22 aufgespannt wird, gegenüber der Konfiguration aus Fig. 2 einem Parallelogramm. Die veränderte Geometrie des Lenktrapezes hat zur Folge, dass der Anstellwinkel α2 kleiner ist als in der in Fig. 2 gezeigten Einstellung, obwohl die Packerwalze um einen größeren Weg seitlich versetzt ist.

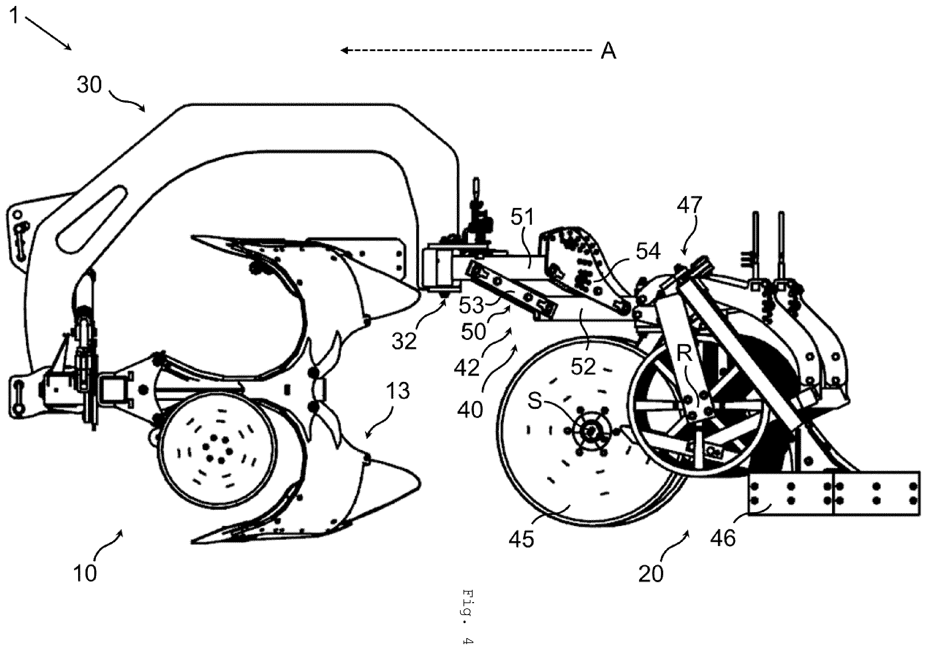

Fig. 4 zeigt das Bodenbearbeitungsgerät 1 aus Fig. 1 in einer Seitenansicht. In Fig. 4 ist die brückenförmige Anhängevorrichtung 30 gut zu erkennen, an der hinter den Pflugkörpern die Packerwalze angebracht ist. Der Volldrehparallelpflug befindet sich in der rechtswendenden Arbeitsstellung, d.h. die rechtswendenden Bodenbearbeitungswerkzeuge 13 sind für eine Bearbeitung des Bodens angeordnet. Zudem ist die Packerwalze in Fig. 4 in Sichtrichtung verschoben und gegenüber dieser angestellt, d.h. die Rotationsachse R der Packerwalze steht nicht genau senkrecht zur Zeichnungsebene.

Die Packerwalze ist mittels der Anstellmechanik 40 an der Anhängevorrichtung 30 des Bodenbearbeitungsgeräts 1 angebracht. Als Teil der Anstellmechanik 40 ist in der gezeigten Darstellung die linke Lenkstange 42 zu erkennen, die schwenkbar an der Bodenbearbeitungseinheitsanbringung 32 angebracht ist. Die Lenkstange 42 ist mehrteilig ausgeführt und umfasst einen oberen Lenkstangenschenkel 51, einen unteren Lenkstangenschenkel 52, einen vorderen Lenkstangenschenkel 53 und einen hinteren Lenkstangenschenkel 54. Der vordere Lenkstangenschenkel 53 und der hintere Lenkstangenschenkel 54 ist an je einem seiner beiden Enden drehbar mit dem oberen Lenkstangenschenkel 51 bzw. dem unteren Lenkstangenschenkel 52 verbunden. Die Lenkstangenschenkel 51, 52, 53, 54 bilden somit die Schenkel einer Parallelogramm-Höhenführung 50. Mittels der Parallelogramm-Höhenführung 50 ist es möglich, eine Höhe der Packerwalze relative zur Höhe der Pflugkörper einzustellen. Die Packerwalze bringt bei der Bearbeitung des Bodens einen Teil der Gewichtskraft des Bodenbearbeitungsgeräts 1 auf den Boden auf. Die Verteilung dieser Gewichtskraft auf die Bodennachbearbeitungseinheit 20, die Bodenbearbeitungswerkzeuge 13 und einen mit dem Bodenbearbeitungsgerät 1 verbundenen Schlepper (nicht gezeigt) kann mit dieser Parallelogramm-Höhenführung 50 beeinflusst und eingestellt werden. Damit geht einher, dass die durch die Bodennachbearbeitungseinheit 20 auf das Bodenbearbeitungsgerät 1 aufbringbare Seitenzugkraft beeinflusst und eingestellt werden kann.

An der Packerwalze sind mehrere mitlaufende Scheibensechen 45 zur Verstärkung der Wechselwirkung der Bodennachbearbeitungseinheit 20 mit dem Boden, insbesondere der aufbringbaren Seitenzugkraft, angebracht. Die Scheibensechen 45 rotieren dabei um jeweils eigene Rotationsachsen S, die parallel zur Rotationsachse R der Packerwalze angeordnet sind. Bei Bedarf können die Rotationsachsen S aber auch gegenüber der Rotationsachse R weiter angestellt werden.

In Fig. 4 ist zudem eine Anlage 46 der Packerwalze dargestellt, die während der Bearbeitung durch den Boden gleitet. Die Anlage 46 ist im gleichen Winkel zur Arbeitsrichtung A angestellt wie die Packerwalze und erhöht dadurch die von der Packerwalze auf das Bodenbearbeitungsgerät 1 ausgeübte Seitenzugkraft. Die Anlage 46 ist über ein Klappgelenk 47 derart mit der Packerwalze verbunden, dass sich die Anlage 46 bei Bedarf aus dem Boden anheben lässt. So kann über die klappbare Anlage 46 eine Wechselwirkung mit dem Boden, z.B. eine Seitenzugkraft, bei Bedarf selektiv vergrößert werden.

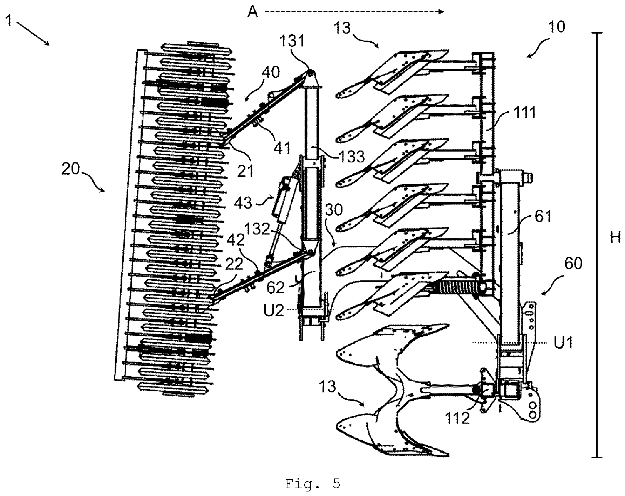

Fig. 5 zeigt eine weitere Ausführungsform eines Bodenbearbeitungsgeräts 1 in einer Transportstellung. Gleiche und entsprechende Elemente des Bodenbearbeitungsgeräts 1 aus Fig. 5 und demjenigen aus einer der übrigen Figuren sind ggf. durch gleiche Bezugszeichen bezeichnet. Die Bodenbearbeitungseinheit 10, auch in dieser Ausführungsform ein Volldrehparallelpflug, weist einen ersten Querrahmen 111 auf, der von einem ersten Ausleger 61 getragen wird. Am ersten Querrahmen 111 sind Pflugkörper als Bodenbearbeitungswerkzeuge 13 aufgereiht angebracht. Der erste Ausleger 61 ist über eine erste Aushebeachse U1 klappbar mit einem Bodenbearbeitungsgeräterahmen 60 verbunden. Der erste Ausleger 61 kann somit nach unten abgelassen und nach oben angehoben werden. In der in Fig. 5 gezeigten Transportstellung ist der Ausleger 61 derart angehoben, dass sich der erste Querrahmen 111 im Wesentlichen senkrecht zum Boden erstreckt. Die Bodenbearbeitungseinheit 10 aus Fig. 5 weist zudem einen zweiten Querrahmen 112 auf, der sich senkrecht zur Zeichnungsebene von Fig. 5 erstreckt und ebenfalls Pflugkörper trägt. Dieser zweite Querrahmen 112 ist in der in Fig. 5 gezeigten Ausführungsform im Gegensatz zum ersten Querrahmen 111 nicht in eine eigene Transportstellung nach oben anhebbar.

In der in Fig. 5 wiedergegebenen Darstellung ist der erste Querrahmen 111 in Arbeitsrichtung A gesehen auf der rechten Seite des Bodenbearbeitungsgeräts 1 angeordnet. Es ist bevorzugt, dass auch auf der linken Seite des Bodenbearbeitungsgeräts 1 ein entsprechender erster Querrahmen (nicht dargestellt) angeordnet ist.

An einer Anhängevorrichtung 30 ist eine Bodennachbearbeitungseinheit 20, auch in dieser Ausführungsform eine Packerwalze, mit einem zweiten Ausleger 62 angebracht. Der zweite Ausleger 62 ist hierfür an einem Ende drehbar um eine zweite Aushebeachse U2 an der Anhängevorrichtung 30 befestigt und trägt an seinem anderen Ende drehbar gelagert einen Querbalken 133. An dem Querbalken 133 ist die Packerwalze in der unten näher beschriebenen Weise befestigt. Mit dem zweiten Ausleger 62 lässt sich der Querbalken 133 aus einer hier nicht gezeigten Arbeitsstellung des Bodenbearbeitungsgeräts 1, in der er sich im Wesentlichen parallel zum Boden, d.h. in Fig. 5 senkrecht zur Zeichenebene, erstreckt, in die in Fig. 5 gezeigte Transportstellung klappen, in der er sich im Wesentlichen senkrecht zum Boden erstreckt. Ein weiterer klappbarer zweiter Ausleger (nicht dargestellt), der auf der linken Seite der Anhängevorrichtung 30 angebracht ist, trägt eine weitere Packerwalze (nicht dargestellt) in analoger Weise.

Der Querbalken 133 weist eine erste Bodenbearbeitungseinheitsanbringung 131 an einem freien Ende und eine zweite Bodenbearbeitungseinheitsanbringung 132 an seinem anderen freien Ende auf. An der Bodenbearbeitungseinheitsanbringung 131 ist ein Ende einer ersten Lenkstange 41 und an der Bodenbearbeitungseinheitsanbringung 132 ein Ende einer zweiten Lenkstange 42 schwenkbar angebracht. Die anderen Enden dieser Lenkstangen 41 und 42 sind jeweils schwenkbar an den Bodennachbearbeitungseinheitsanbringungen 21 bzw. 22 angebracht, so dass die Packerwalze über die Lenkstangen 41, 42 getragen wird.

Die Ausrichtung der ersten und zweiten Lenkstange 41, 42 bestimmt in der in Fig. 5 gezeigten Transportstellung eine Transporthöhe H der Bodennachbearbeitungseinheit 20 und damit zu wesentlichen Teilen auch des Bodenbearbeitungsgeräts 1, die durch den Anstellmechanismus 40 kleiner als eine zulässige Straßentransporthöhe eingestellt werden kann, soweit dies durch die Abmessungen der Bodenbearbeitungseinheit 10 möglich ist. Mit Hilfe des Anstellmechanismus 40 wird die Bodennachbearbeitungseinheit 20 in der Transportstellung soweit wie möglich abgelassen. Bei der in Fig. 5 dargestellten Packerwalze wird hierfür der Hydraulikzylinder 43 des Anstellmechanismus 40 in eine ganz ausgefahrene Stellung gebracht. Für die weitere (nicht dargestellte) Packerwalze, die vom dem klappbaren zweiten (nicht dargestellten) Ausleger auf der linken Seite des Bodenbearbeitungsgeräts 1 getragen wird und bei der der Anstellmechanismus analog ausgeführt ist, d.h. bei der der Hydraulikzylinder ebenfalls an der linken Lenkstange 42 angebracht ist, die in Transportstellung zur oberen Lenkstange wird, ist der Hydraulikzylinder in der Transportstellung ganz eingefahren, um die Packerwalze soweit wie möglich abzulassen.

In der in Fig. 5 gezeigten Transportstellung führt eine Abweichung der Trapezform von einem Parallelogramm zu einem Neigungswinkel der Packerwalze relativ zur Senkrechten. Vorzugweise kann dieser Neigungswinkel mittels einer Einstellung des Abstands der Bodenbearbeitungseinheitsanbringungen 21, 22 auf null eingestellt werden. Die Bodenbearbeitungseinheitsanbringungen 131, 132 und die Bodennachbearbeitungseinheitsanbringungen 21, 22 spannen dann ein Parallelogramm auf, was in Fig. 5 jedoch nicht gezeigt ist.

### BEZUGSZEICHENLISTE

- 1: Bodenbearbeitungsgerät
- 10: Bodenbearbeitungseinheit
- 11, 111: erster Querrahmen
- 12, 112: zweiter Querrahmen
- 13: Bodenbearbeitungswerkzeuge
- 20: Bodennachbearbeitungseinheit
- 21: erste Bodennachbearbeitungseinheitsanbringung
- 22: zweite Bodennachbearbeitungseinheitsanbringung
- 23: Packerwalzenquerrahmen
- 30: Anhängevorrichtung
- 31, 131: erste Bodenbearbeitungseinheitsanbringung
- 32, 132: zweite Bodenbearbeitungseinheitsanbringung
- 33: erster Querbalken
- 34: zweiter Querbalken
- 35: Längsträger
- 40: Anstellmechanik
- 41: erste Lenkstange
- 42: zweite Lenkstange
- 43: Hydraulikzylinder
- 45: Scheibenseche
- 46: Anlage
- 47: Klappgelenk
- 50: Parallelogramm-Höhenführung
- 51: oberer Lenkstangenschenkel
- 52: unterer Lenkstangenschenkel
- 53: vorderer Lenkstangenschenkel
- 54: hinterer Lenkstangenschenkel
- 60: Bodenbearbeitungsgeräterahmen
- 61: erster Ausleger
- 62: zweiter Ausleger
- 133: Querbalken
- A: Arbeitsrichtung
- B: linker Seitenbereich
- C: rechter Seitenbereich
- R, S: Rotationsachse
- T: Transporthöhe
- U1: erste Aushebeachse
- U2: zweite Aushebeachse
- W1: erster Anbringungsabstand
- W2: zweiter Anbringungsabstand
- α1, α2: Anstellwinkel

## Patentansprüche

1. Bodenbearbeitungsgerät (1) mit einer Bodenbearbeitungseinheit (10) zum Bearbeiten eines Bodens mit Bodenbearbeitungswerkzeugen (13) entlang einer Arbeitsrichtung (A), die dazu ausgestaltet ist, in einer ersten Arbeitsstellung eine linkswendende Bearbeitung des Bodens und in einer zweiten Arbeitsstellung eine rechtswendende Bearbeitung des Bodens durchzuführen,
wobei an der Bodenbearbeitungseinheit eine Bodennachbearbeitungseinheit (20) derart angebracht ist, dass die Bodennachbearbeitungseinheit in Arbeitsrichtung hinter der Bodenbearbeitungseinheit angeordnet ist, **dadurch gekennzeichnet, dass** die Bodennachbearbeitungseinheit mittels einer schwenkbaren Anstellmechanik (40) angebracht ist,
wobei durch die Anstellmechanik die Bodennachbearbeitungseinheit in Bezug auf die Arbeitsrichtung seitlich versetzbar und in einem Anstellwinkel (α1, α2) gegenüber der Arbeitsrichtung zu beiden Seiten anstellbar ist, um eine einstellbare Seitenzugkraft durch eine Wechselwirkung mit dem Boden auf das Bodenbearbeitungsgerät auszuüben.

2. Bodenbearbeitungsgerät (1) nach Anspruch 1 wobei die Anstellmechanik (40) eine erste Lenkstange (41) mit einer ersten Lenkstangen-Länge und eine zweite Lenkstange (42) mit einer zweiten Lenkstangen-Länge aufweist, welche die Bodennachbearbeitungseinheit (20) und das Bodenbearbeitungsgerät miteinander verbinden,
wobei sich die erste Lenkstange zwischen einer ersten Bodenbearbeitungseinheitsanbringung (31, 131) an der Bodenbearbeitungseinheit (10) und einer ersten Bodennachbearbeitungseinheitsanbringung (21) an der Bodennachbearbeitungseinheit (20) erstreckt und sich die zweite Lenkstange zwischen einer zweiten Bodenbearbeitungseinheitsanbringung (32, 132) an der Bodenbearbeitungseinheit und einer zweiten Bodennachbearbeitungseinheitsanbringung (22) an der Bodennachbearbeitungseinheit erstreckt, wobei
a) die erste Lenkstange und die zweite Lenkstange in Arbeitsrichtung (A) auseinanderlaufen, oder
b) die erste Lenkstange und die zweite Lenkstange parallel zueinander verlaufen und die erste Lenkstangen-Länge und/oder die zweite Lenkstange-Länge einstellbar ist.

3. Bodenbearbeitungsgerät (1) nach Anspruch 2, wobei die erste Bodennachbearbeitungseinheitsanbringung (21) und die zweite Bodennachbearbeitungseinheitsanbringung (22) in Arbeitsrichtung (A) so an der Bodennachbearbeitungseinheit (20) angeordnet ist, dass sich die Bodennachbearbeitungseinheit zum größten Teil in Arbeitsrichtung vor oder hinter der ersten Bodennachbearbeitungseinheitsanbringung und der zweiten Bodennachbearbeitungseinheitsanbringung befindet.

4. Bodenbearbeitungsgerät (1) nach einem der Ansprüche 1 bis 3, wobei die Bodenbearbeitungseinheit (10) ein Pflug, bevorzugt ein Drehpflug, besonders bevorzugt ein Volldrehpflug, ganz besonders bevorzugt ein Volldrehparallelpflug ist, wobei die Bodenbearbeitungswerkzeuge (13) Pflugkörper sind.

5. Bodenbearbeitungsgerät (1) nach einem der Ansprüche 1 bis 4, wobei die Bodennachbearbeitungseinheit (20) dazu ausgebildet ist, eine Rückverfestigung, Einebnung oder Aussaat zu bewirken, und insbesondere eine Packerwalze, Stabwalze, Messerwalze, Tiefenführungswalze, Kreiselegge, Messerschiene, Zinkenschiene, Planierschiene oder Säschiene ist.

6. Bodenbearbeitungsgerät (1) nach einem der Ansprüche 1 bis 5, wobei eine Arbeitstiefe der Bodenbearbeitungswerkzeuge (10), vorzugsweise gegenüber der Bodennachbearbeitungseinheit (20), einstellbar ist,
wobei bevorzugt die Anstellmechanik (40) eine Höhenführung, insbesondere eine Parallelogramm-Höhenführung (50), aufweist, um ein Einstellen und/oder Verändern der Arbeitstiefe der Bodenbearbeitungswerkzeuge gegenüber der Bodennachbearbeitungseinheit (20) unabhängig vom eingestellten Anstellwinkel (α1, α2) zu bewirken.

7. Bodenbearbeitungsgerät (1) nach einem der Ansprüche 1 bis 6, wobei das Bodenbearbeitungsgerät einen ersten Endanschlag und einen zweiten Endanschlag für die Anstellmechanik (40) aufweist, durch den der jeweilige Anstellwinkel (α1, α2) nach links und rechts bezogen auf die Arbeitsrichtung (A) voreinstellbar ist,
wobei der Anstellwinkel insbesondere durch Umstellen der Anstellmechanik zwischen dem ersten Endanschlag und dem zweiten Endanschlag zwischen rechts und links umstellbar ist.

8. Bodenbearbeitungsgerät (1) nach Anspruch 1 oder Anspruch 2 und einem der Ansprüche 3 bis 7, wobei der Anstellwinkel (α1, α2) variabel einstellbar ist,
insbesondere indem ein erster Anbringungsabstand (W1) zwischen der ersten Bodenbearbeitungseinheitsanbringung (31, 131) und der zweiten Bodenbearbeitungseinheitsanbringung (32, 132) variabel einstellbar ist,
insbesondere indem ein zweiter Anbringungsabstand (W2) zwischen der ersten Bodennachbearbeitungseinheitsanbringung (21) und der zweiten Bodennachbearbeitungseinheitsanbringung (22) variabel einstellbar ist und/oder
insbesondere indem die erste Lenkstangen-Länge und/oder die zweite Lenkstangen-Länge variabel einstellbar ist.

9. Bodenbearbeitungsgerät (1) nach Anspruch 8, wobei der Anstellwinkel (α1, α2) mechanisch durch festgelegte Rastpositionen, mechanisch durch Federvorspannung, durch einen Stellmotor durch Steuerung durch einen Bediener und/oder hydraulisch durch automatische Steuerung variabel einstellbar ist.

10. Bodenbearbeitungsgerät (1) nach einem der Ansprüche 1 bis 9, wobei die Anstellmechanik (40) dazu ausgestaltet ist, über einen Zwangsantrieb oder eine Folgeschaltung ein Anstellen der Bodennachbearbeitungseinheit (20) aufgrund eines Umstellens der Bodenbearbeitungseinheit (10) zwischen der ersten Arbeitsstellung und der zweiten Arbeitsstellung zu bewirken.

11. Bodenbearbeitungsgerät (1) nach einem der Ansprüche 1 bis 10, das aus zumindest einer der Arbeitsstellungen in eine Transportstellung klappbar ist, in der die Bodennachbearbeitungseinheit (20) sich hauptsächlich vertikal erstreckt und in der es eine Transporthöhe (H) aufweist,
wobei die Anstellmechanik (40) bevorzugt dazu ausgestaltet ist, eine vertikale Position der Bodennachbearbeitungseinheit in Bezug auf einen Bodenbearbeitungsgeräterahmen (60), optional mittels einer Federmechanik, einzustellen,
sodass die Transporthöhe (H) nicht größer ist als eine zulässige Straßentransporthöhe.

12. Bodenbearbeitungsgerät (1) nach Anspruch 1 oder Anspruch 2 und einem der Ansprüche 3 bis 11, wobei die Bodenbearbeitungseinheit (10) die Bodenbearbeitungswerkzeuge an zumindest drei Querrahmen trägt, die sich zusammen zu einer Arbeitsbreite erstrecken, wobei mindestens für den äußerst rechten Querrahmen und den äußerst linken Querrahmen eine Anstellmechanik (40) vorgesehen ist, mittels derer jeweils eine Bodennachbearbeitungseinheit (20) an dem jeweiligen Querrahmen angebracht ist und die jeweils die erste Lenkstange (41) und die zweite Lenkstange (42) aufweist.

13. Bodenbearbeitungsgerät (1) nach einem der Ansprüche 1 bis 12, wobei die Bodennachbearbeitungseinheit (20) ferner ein Führungswerkzeug, insbesondere eine Scheibenseche (45) und/oder eine Anlage (46), umfasst, das bevorzugt mit dem Boden in Wechselwirkung bringbar ist, um die Seitenzugkraft zu beeinflussen.

14. Bodenbearbeitungsgerät (1) nach einem der Ansprüche 1 bis 13, wobei vor und/oder hinter der Bodennachbearbeitungseinheit (20) eine Verteileinrichtung zur Ausbringung von festen und/oder flüssigen Stoffen, insbesondere Düngemitteln und/oder Saatgut, angeordnet ist.

## Claims

1. A soil cultivation implement (1) having a soil cultivation unit (10) for cultivating a soil with soil cultivation tools (13) along a working direction (A), which is configured for carrying out in a first working position a left-turning cultivation of the soil and in a second working position a right-turning cultivation of the soil,
wherein on the soil cultivation unit a soil reconsolidation unit (20) is attached in such a manner that the soil reconsolidation unit is arranged in the working direction behind the soil cultivation unit,
**characterised**
**in that** the soil reconsolidation unit is attached by means of a pivotable setting mechanism (40),
wherein through the setting mechanism the soil reconsolidation unit with respect to the working direction can be laterally offset and can be set at a pitch angle (α1, α2) relative to the working direction on both sides in order to exert an adjustable side pulling force on the soil cultivation implement through interaction with the soil.

2. The soil cultivation implement (1) according to Claim 1, wherein the setting mechanism (40) comprises a first steering rod (41) with a first steering rod length and a second steering rod (42) with a second steering rod length, which connect the soil reconsolidation unit (20) and the soil cultivation unit with one another,
wherein the first steering rod extends between a first soil cultivation unit attachment (31, 131) on the soil cultivation unit (10) and a first soil reconsolidation unit attachment (21) on the soil reconsolidation unit (20) and the second steering rod extends between a second soil cultivation unit attachment (32, 132) on the soil cultivation unit and a second soil reconsolidation unit attachment (22) on the soil reconsolidation unit,
wherein
a) the first steering rod and the second steering rod diverge in the working direction (A), or
b) the first steering rod and the second steering rod run parallel to one another and the first steering rod length and/or the second steering rod length is adjustable.

3. The soil cultivation implement (1) according to Claim **2,**
wherein the first soil reconsolidation unit attachment (21) and the second soil reconsolidation unit attachment (22) is arranged in the working direction (A) on the soil reconsolidation unit (20) so that the soil reconsolidation unit is situated for the greatest part in working direction before or behind the first soil reconsolidation unit attachment and the second soil reconsolidation unit attachment.

4. The soil cultivation implement (1) according to any one of the Claims 1 to 3,
wherein the soil cultivation unit (10) is a plough, preferably a reversible plough, particularly preferably a full-rotation plough, most preferably a full-rotation parallel plough, wherein the soil cultivation tools (13) are plough bodies.

5. The soil cultivation implement (1) according to any one of the Claims 1 to 4,
wherein the soil reconsolidation unit (20) is designed to bring about a reconsolidation, flattening or seed application, and in particular is a packer roller, bow roller, knife roller, depth guiding roller, circular harrow, knife rail, tine rail, planing rail or sowing rail.

6. The soil cultivation implement (1) according to any one of the Claims 1 to 5,
wherein a working depth of the soil cultivation tools (10), is adjustable, preferentially relative to the soil reconsolidation unit (20),
wherein preferably the setting mechanism (40) comprises a height control, in particular a parallelogram height control (50) in order to bring about a setting and/or changing of the working depth of the soil cultivation tools relative to the soil reconsolidation unit (20) irrespective of the set pitch angle (α1, α2).

7. The soil cultivation implement (1) according to any one of the Claims 1 to 6,
wherein the soil cultivation implement comprises a first end stop and a second end stop for the setting mechanism (40), through which the respective pitch angle (α1, α2) is pre-settable to the left and right based on the working direction (A),
wherein the pitch angle can be changed over between right and left in particular by changing over the setting mechanism between the first end stop and the second end stop.

8. The soil cultivation implement (1) according to Claim 1 or Claim 2 and any one of the Claims 3 to 7,
wherein the pitch angle (α1, α2) is variably adjustable, in particular in that a first attachment distance (W1) between the first soil cultivation unit attachment (31, 131) and the second soil cultivation unit attachment (32, 132) is variably adjustable,
in particular in that a second attachment distance (W2) between the first soil reconsolidation unit attachment (21) and the second soil reconsolidation unit attachment (22) is variably adjustable and/or
in particular in that the first steering rod length and/or the second steering rod length are/is variably adjustable.

9. The soil cultivation implement (1) according to Claim 8,
wherein the pitch angle (α1, α2) is variably adjustable mechanically by fixed detent positions, mechanically by spring preload, by an actuator, through control by an operator and/or hydraulically by automatic control.

10. The soil cultivation implement (1) according to any one of the Claims 1 to 9, wherein the setting mechanism (40) is configured to bring about, via a positive drive or a sequence control, a setting of the soil reconsolidation unit (20) based on a change-over of the soil cultivation unit (10) between the first working position and the second working position.

11. The soil cultivation implement (1) according to any one of the Claims 1 to 10, which is foldable out of at least one of the working positions into a transport position, in which the soil reconsolidation unit (20) extends mainly vertically and in which it has a transport height (H),
wherein the setting mechanism (40) is preferably configured for setting a vertical position of the soil reconsolidation unit with respect to a soil cultivation implement frame (60), optionally by means of a spring mechanism,
so that the transport height (H) is not greater than a permissible road transport height.

12. The soil cultivation implement (1) according to Claim 1 or Claim 2 and one of the Claims 3 to 11,
wherein the soil cultivation unit (10) carries the soil cultivation tools on at least three cross frames, which together extend to a working width,
wherein at least for the extremely right cross frame and the extremely left cross frame a setting mechanism (40) is provided, by means of which a soil reconsolidation unit (20) each is attached to the respective cross frame and which in each case comprises the first steering rod (41) and the second steering rod (42).

13. The soil cultivation implement (1) according to any one of the Claims 1 to 12,
wherein the soil reconsolidation unit (20) further includes a guiding tool, in particular a disc coulter (45) and/or a mouldboard (46), which preferably can be brought to interact with the soil in order to influence the side pulling force.

14. The soil cultivation implement (1) according to any one of the Claims 1 to 13,
wherein before and/or behind the soil reconsolidation unit (20) a distribution device for application of solid and/or liquid substances, in particular fertilisers and/or seeds, is arranged.

## Revendications

1. Appareil de travail du sol (1), pourvu d'une unité de travail du sol (10) destinée à travailler le sol avec des outils de de travail du sol (13) le long **d'une** direction de travail (A), qui est conçue pour, dans une première position de travail, procéder à un travail du sol tourné vers la gauche et dans une deuxième position de travail, procéder à un travail du sol tourné vers la droite,
sur l'unité de travail du sol, une unité de post-travail du sol (20) étant montée de telle sorte que l'unité de post-travail du sol soit placée derrière l'unité de travail du sol dans la direction de travail,
**caractérisé en ce que** l'unité de post-travail du sol est montée au moyen d'un mécanisme de mise en prise (40) pivotant,
par le mécanisme de mise en prise, l'unité de post-travail du sol étant déplaçable latéralement en rapport à la direction de travail et étant susceptible d'être mise en prise vers les deux côtés sous un angle d'attaque (α1, α2) à l'égard de la direction de travail, pour exercer une force de traction latérale réglable par une interaction avec le sol sur l'appareil de travail du sol.

2. Appareil de travail du sol (1) selon la revendication 1 le mécanisme de mise en prise (40) comportant une première bielle de direction (41) d'une première longueur de bielle de direction et une deuxième bielle de direction (42) d'une deuxième longueur de bielle de direction, lesquelles relient ensemble l'unité de post-travail du sol (20) et l'appareil de travail du sol,
la première bielle de direction s'étendant entre un premier montage (31, 131) de l'unité de travail du sol sur l'unité de travail du sol (10) et un premier montage (21) de l'unité de post-travail du sol sur l'unité de post-travail du sol (20) et la deuxième bielle de direction s'étendant en un deuxième montage (32, 132) de l'unité de travail du sol sur l'unité de travail du sol et un deuxième montage (22) de l'unité de post-travail du sol (22) sur l'unité de post-travail du sol,
a) la première bielle de direction et la deuxième bielle de direction divergeant dans la direction de travail (A) ou
b) la première bielle de direction et la deuxième bielle de direction s'écoulant à la parallèle l'une de l'autre et la première longueur de bielle de direction et / ou la deuxième longueur de bielle de direction étant réglable.

3. Appareil de travail du sol (1) selon la revendication 2, le premier montage (21) d'unité de post-travail du sol (21) et le deuxième montage (22) d'unité de post-travail du étant placé sur l'unité de post-travail du sol dans la direction de travail (A), de telle sorte que l'unité de post-travail du sol (20) se trouve en majeure partie à l'avant ou à l'arrière du premier montage de l'unité de post-travail du sol et du deuxième montage de l'unité de post-travail du sol, dans la direction de travail.

4. Appareil de travail du sol (1) selon l'une quelconque des revendications 1 à 3, l'unité de travail du sol (10) étant une charrue, de préférence une charrue réversible, de manière particulièrement préférentielle, une charrue totalement réversible, de manière tout particulièrement préférentielle, une charrue parallèle totalement réversible, les outils de travail du sol (13) étant des corps de charrue.

5. Appareil de travail du sol (1) selon l'une quelconque des revendications 1 à 4, l'unité de post-travail du sol (20) étant conçue pour provoquer une reconsolidation, un aplanissement ou un ensemencement et étant notamment un rouleau Packer, un rouleau cage, un rouleau porte-lame, un rouleau de guidage en profondeur, une herse rotative, une barre de coupe, une barre à dents, une barre niveleuse ou une barre de semis.

6. Appareil de travail du sol (1) selon l'une quelconque des revendications 1 à 5, une profondeur de travail des outils de travail du sol (10) étant réglable de préférence à l'égard de l'unité de post-travail du sol (20), de préférence le mécanisme de mise en prise (40) comportant un guidage en hauteur, notamment un parallélogramme de guidage en hauteur (50) pour provoquer un réglage et / ou une modification de la profondeur de travail des outils de travail du sol à l'encontre de l'unité de post-travail du sol (20), indépendamment de l'angle d'attaque (α1, α2) réglé.

7. Appareil de travail du sol (1) selon l'une quelconque des revendications 1 à 6, l'appareil de travail du sol comportant une première butée de fin de course et une deuxième butée de fin de course pour le mécanisme de mise en prise (40) par laquelle l'angle d'attaque (α1, α2) est pré-réglable vers la gauche et vers la droite, en rapport à la direction de travail (A),
l'angle d'attaque étant susceptible d'être changé entre la droite et la gauche, notamment par changement du mécanisme de mise en prise entre la première butée de fin de course et la deuxième butée de fin de course.

8. Appareil de travail du sol (1) selon la revendication 1 ou la revendication 2 et l'une quelconque des revendications 3 à 7, l'angle d'attaque (α1, α2) étant réglable de manière variable,
notamment en ce qu'un premier écart de montage (W1) entre le premier montage (31, 131) de l'unité de travail du sol et le deuxième montage (32, 132) de l'unité de travail du sol est réglable de manière variable,
notamment en ce qu'un deuxième écart de montage (W2) entre le premier montage de l'unité de post-travail du sol
et le deuxième montage de l'unité de post-travail du sol est réglable de manière variable et / ou
notamment en ce que la première longueur de bielle de direction et / ou la deuxième longueur de bielle de direction est réglable de manière variable.

9. Appareil de travail du sol (1) selon la revendication 8, l'angle d'attaque (α1, α2) étant réglable de manière variable, mécaniquement par des positions d'enclenchement déterminées, mécaniquement par une précontrainte par ressort, par un servomoteur par commande par un utilisateur et / ou hydrauliquement par une commande automatique.

10. Appareil de travail du sol (1) selon l'une quelconque des revendications 1 à 9, le mécanisme de mise en prise (40) étant conçu pour provoquer par l'intermédiaire d'un entraînement forcé ou une commande séquentielle une mise en prise de l'unité de post-travail du sol (20) par suite d'un changement de l'unité de travail du sol (10) entre la première position de travail et la deuxième position de travail.

11. Appareil de travail du sol (1) selon l'une quelconque des revendications 1 à 10, qui peut se basculer à partir d'au moins l'une des positions de travail dans une position de transport, dans laquelle l'unité de post-travail du sol (20) s'étend principalement à la verticale et dans laquelle il présente une hauteur de travail (H),
le mécanisme de mise en prise (40) étant conçu de préférence pour régler une position verticale de l'unité de post-travail du sol en rapport à un cadre (60) de l'appareil de travail, en option au moyen d'un mécanisme à ressort,
de telle sorte que la hauteur de transport (H) n'excède pas une hauteur autorisée de transport sur route.

12. Appareil de travail du sol (1) selon la revendication 1 ou la revendication 2 et l'une quelconque des revendications 3 à 11, l'unité de travail du sol (10) portant les outils de travail du sol sur au moins trois cadres transversaux, qui s'étendent ensemble en une largeur de travail, au moins pour le cadre extrême à droite et le cadre extrême à gauche étant prévu un mécanisme de mise en prise (40), au moyen duquel chaque fois une unité de post-travail du sol (20) est montée sur le cadre transversal respectif et qui comporte respectivement la première bielle de direction (41) et la deuxième bielle de direction (42).

13. Appareil de travail du sol (1) selon l'une quelconque des revendications 1 à 12, l'unité de post-travail du sol (20) comprenant par ailleurs un outil de guidage, notamment un coutre circulaire (45) et / ou un appui (46), qui est de préférence susceptible d'être amené en interaction avec le sol, pour influencer la force de traction latérale.

14. Appareil de travail du sol (1) selon l'une quelconque des revendications 1 à 13, à l'avant et / ou à l'arrière de l'unité de post-travail du sol (20) étant placé un système distributeur, destiné à épandre des matières solides et / ou liquides, notamment des agents fertilisants et / ou des semences.
